# EUROPEAN PATENT APPLICATION

(11) **EP 2 926 969 A1**
(43) Date of publication of application: **07.10.2015**
(21) Application number: 14162993.1
(22) Date of filing: 01.04.2014
(51) Int. Cl.: B29C 45/14, B29C 67/00

(54) **A method for producing a 3D-printed hollow structure having a smooth inner surface, and a 3D-printed hollow structure**

(71) Applicant: Airbus Operations GmbH, 21129 Hamburg (DE)
(72) Inventor: Van der Bos, Roelant, 22297 Hamburg (DE)
(74) Representative: UEXKÜLL & STOLBERG

(57) **Abstract**

Described is a method for producing a 3D-printed hollow structure (1) having a smooth inner surface, said method comprising the steps of:
(a) providing a 3D-printed hollow structure (1) having an interior space (3) and a wall (5) at least partially enclosing said interior space (3),
wherein said wall (5) has a wall inner surface (7) facing the interior space (3), and
(b) applying a layer (9) of plastic material (13) to the wall inner surface (7),
wherein said layer (9) has a layer inner surface (11) facing the interior space (3), and
wherein said layer inner surface (11) has a lower surface roughness than the wall inner surface (7).

## Description

The present invention relates to a method for producing a 3D-printed hollow structure having a smooth inner surface, as well as to a 3D-printed hollow structure. Such hollow structures may, in particular, be pipes, pipe fittings, other pipe elements or various cavity structures.

A 3D-printed hollow structure within the meaning of the present invention may be a hollow structure which is produced by any kind of 3D-printing method or additive layer manufacturing (ALM) method, wherein a structure is formed by local heating of powders or fluids which are applied successively in a layered manner.

3D-printing techniques are often used in the art for producing very small and complex shaped structures which require a high degree of precision, such as fluid pipes, e.g. for aircraft hydraulics. However, structures printed by 3D-printing techniques usually show a considerably low surface quality, i.e. high surface roughness, which is disadvantageous, in particular on the inner surface of pipes or other hollow structures through which a fluid is passed, as such surface roughness increases the friction and flow resistance for a fluid passed through said hollow structure.

Various methods for eliminating such surface roughness on the inner surface of 3D-printed hollow structures are known in the art, ranging from mechanical grinding or polishing by means of certain mechanical tools inserted into the hollow structure, to fluid grinding by means of an abrasive fluid which is passed through the hollow structure. However, these methods are disadvantageous, as, in particular with regard to the small scale of the 3D-printed hollow structure, it is very difficult to reach and work the inside of such hollow structure with a mechanical tool, and abrasive fluids passed through the hollow structure usually cause uneven surface quality and different diameters on the inner surface of the hollow structure since the grinding effect of the abrasive fluid cannot be controlled in a uniform manner.

From WO 2013/124649 A1 it is known in general to seal the pores of a 3D-printed metal structure by fusing a metal material onto its surface. However, WO 2013/124649 A1 does not address the particular problem on the inner surface of 3D-printed hollow structures, where high precision is required and therefore fusing of metal material in the process described is not applicable because of the high temperatures required for fusing metal causing the 3D-printed hollow structure to deform. In addition, the process described requires mechanical working of the inner surfaces, which can be hard or impossible for internal cavities

Therefore, the object of the present invention is to provide a method for producing a 3D-printed hollow structure having a smooth inner surface which is considerably easier to achieve in manufacturing and wherein the tolerances on the inner surface of the hollow structure are best met.

This object is achieved by a method for producing a 3D-printed hollow structure having a smooth inner surface, said method comprising the steps of:
(a) providing a 3D-printed hollow structure having an interior space and a wall at least partially enclosing said interior space,
   wherein said wall has a wall inner surface facing the interior space,
(b) applying, in particular bonding, a layer of plastic material, in particular thermoplastic or thermoset material, to the wall inner surface,
   wherein said layer has a layer inner surface facing the interior space, and
   wherein said layer inner surface has a lower surface roughness than the wall inner surface.

In such a manner by the layer inner surface which is less rough than the wall inner surface covered by the layer, the surface roughness of the inner surface of the 3D-printed hollow structure is decreased. The layer of plastic material can be applied to the wall inner surface in different ways so that the layer inner surface is provided with a lower surface roughness than the wall inner surface.

In one preferred embodiment of the present invention the layer of plastic material is applied to the wall inner surface by the following steps:
(b.1) providing a plastic material in the liquid state,
(b.2) applying said liquid plastic material to the wall inner surface in such a manner that the plastic material forms a smooth layer on the wall inner surface, and
(b.3) solidifying, in particular curing, the layer of plastic material so that it adheres to the wall inner surface.

In such a way when the layer of plastic material solidifies a layer inner surface smoother than the wall inner surface is formed by the air pressure of the surrounding air, by adhesion of the liquid plastic material and the wall inner surface, or by help of a tool which e.g. molds the inner surface.

In particular it is preferred that the liquid plastic material is applied to the wall inner surface by the steps of:
(b.2.1) passing, in particular pouring, the liquid plastic material into the interior space so that it contacts the wall inner surface, and
(b.2.2) removing possible excessive liquid plastic material from the interior space so that only a layer of plastic material remains adhering to the wall inner surface.

The liquid plastic material can be passed into the interior space in such a manner that the entire interior space is filled with the liquid plastic material, or alternatively, it can be applied, e.g. poured or sprayed, only to the wall inner surface so that it covers the wall inner surface. Such a way of applying the liquid plastic material to the wall inner surface is very simple to carry out.

Alternatively, it is preferred that the liquid plastic material is applied to the wall inner surface by the steps of:
(b.2.1) inserting a mold element into the interior space, wherein said mold element is formed in such a manner that between an outer surface of the mold element and the, preferably entire, wall inner surface a gap is provided, said gap preferably having a width corresponding to the desired width of the layer to be applied,
(b.2.2) inserting the liquid plastic material into the gap between the outer surface of the mold element and the wall inner surface.

In the case that the 3-D printed hollow structure comprises a pipe the mold element may be formed as a cylinder or may have a cylindrical lateral surface. The surface of the mold element forms the layer inner surface, so that the surface quality, i.e. the surface roughness, of the surface of the mold element defines the surface quality, i.e. the surface roughness, of the layer inner surface. Therefore, the mold element is provided with a considerably smooth surface.

In particular, it is preferred that the liquid plastic material is inserted into the gap between the outer surface of the mold element and the wall inner surface by means of injection, infusion, or resin transfer molding (RTM).

Injection within the meaning of the present invention is defined by insertion of material, i.e. the liquid plastic material, into a space, i.e. the gap, by applying pressure onto the material to force it into that space. Infusion within the meaning of the present invention means insertion of material, i.e. the liquid plastic material, by applying lower pressure onto a target space, i.e. the gap, to draw the material into that space. RTM within the meaning of the present invention is understood as a technique combining both injection and infusion at the same time. All these techniques, injection, infusion, and RTM, provide for a very fast and reliable insertion of the liquid plastic material into the gap.

In particular it is preferred that the mold element is formed solidly. In such a manner the mold element is stable and the surface of the mold element, which is responsible for the surface quality of the layer inner surface, is considerably rigid, i.e. does not deform. The mold element may also be heated or cooled in order to support or accelerate the process of solidifying the layer of plastic material, or even to keep the plastic material in the liquid state as long as desired during insertion of the liquid plastic material.

Alternatively, it is preferred that the mold element is formed as a hollow body, e.g. a pipe, through which a pressurized fluid is passed stabilizing the hollow body. In such a way the pressurized fluid helps keeping the surface of the mold element in a considerably rigid and not deformed shape, so that a precise and high quality layer inner surface can be formed. The pressurized fluid passing through the hollow body may also be heated or cooled in order to support the process of solidifying the layer of plastic material, or even to keep the plastic material in the liquid state as long as desired during insertion of the liquid plastic material into the gap.

Alternatively, when the mold element is formed as a hollow body, and the pressure or the volume of the fluid is varied throughout the process, the mold element is deformed so as to vary the gap between the mold element and the wall inner surface.

According to a preferred embodiment the plastic material comprises or is a thermoplastic material, such as Polyethylene (PE), Polyether Ether Ketone (PEEK), or Polyetherimide (PEI), which is cooled for solidifying. The thermoplastic material has the advantage that it only needs to be heated once to the liquid state before processing and then solidifies during cooling without any further action required. However, solidifying can be accelerated or controlled by forced cooling.

According to an alternative embodiment the plastic material comprises or is a thermoset material, such as Epoxy or Vinylester resin, which is heated or aged for solidifying. The advantage of a thermoset material is that it can be processed in the liquid state without any action required and only for solidifying heated once, or even merely aged over a certain period of time.

In an alternative embodiment of the present invention the layer of plastic material is applied to the wall inner surface by the following steps:
(b.1) providing a shell element, such as a pipe or other shape, of plastic material, wherein said shell element has a shell outer surface and a shell inner surface,
(b.2) inserting the shell element into the interior space, wherein said shell outer surface faces and corresponds to the wall inner surface, and wherein said shell inner surface faces the interior space, and
(b.3) adhering the shell outer surface to the wall inner surface.

When inserting the shell element into the interior space a small tolerance is preferably left between the shell outer surface and the wall inner surface for receiving bonding material or for movement of the shell element into the interior space. The shell inner surface is formed such that it has a lower surface roughness than the wall inner surface. In such a way the inner surface of the 3D-printed hollow structure can be defined by the form of the shell inner surface already before the shell element is inserted into the interior space. In such a way the shell element adhered to the wall inner surface forms the layer of plastic material.

According to a preferred embodiment the shell outer surface is adhered to the wall inner surface by means of any bonding material, such a Methyl Methacrylate (MMA) or Epoxy resin, provided between the shell outer surface and the wall inner surface. By the bonding material the shell element can be reliably adhered to the wall inner surface.

In particular, it is preferred that the bonding material is applied to the shell outer surface before inserting the shell element into the interior space. In such a manner the shell element can be prepared before insertion into the interior space and no bonding material needs to be applied after said insertion.

Alternatively, it is preferred that the bonding material is inserted between the shell outer surface and the wall inner surface after inserting the shell element into the interior space by means of injection, infusion, or RTM. In such a manner the bonding material does not need to be applied to the shell outer surface before inserting the shell element into the interior space and the positioning of the bonding material between the shell outer surface and the wall inner surface can be effectively controlled.

A pressurized fluid can be received in or passed through the shell element so as to stabilize the shape of the shell element. Further, the pressure or volume of the fluid can be varied throughout the process to vary the gap between the shell outer surface and the wall inner surface.

In an alternative embodiment the shell element is formed of a thermoplastic material and the shell outer surface is adhered to the wall inner surface by the steps of:
(b.3.1) heating up the shell element until it is at least partially plastified,
(b.3.2) pressing the shell element to the wall inner surface so that the shell element is plastically deformed and the shell outer surface contacts the wall inner surface, and
(b.3.3) cooling the shell element until it solidifies and the shell outer surface adheres to the wall inner surface.

In such a manner no bonding material between the shell element and the wall inner surface is required for adhering the shell outer surface to the wall inner surface, as the shell outer surface adheres to the wall inner surface upon plastification and plastical deformation of the shell element. The plastical deformation of the shell element is reduced to a minimum, when the shell element is formed such that the shell outer surface rests against the wall inner surface, wherein plastical deformation merely comprises establishing of the adherence of the shell outer surface to the wall inner surface.

In particular, it is preferred that the shell element is heated up by means of a heated fluid which is passed through the interior space in contact to the shell inner surface, deformed by means of a pressurized fluid which is passed through the interior space in contact to the shell inner surface, and cooled by means of a cooled fluid which is passed through the interior space in contact to the shell inner surface.

In such a way no further tools are necessary for heating up, deforming or cooling the shell element during the process of adhering of the shell outer surface to the wall inner surface.

Heating, deforming and cooling can effectively be carried out by a fluid which is passed through the inside of the shell element, i.e. the interior space. The heated fluid, the pressurized fluid, and the cooled fluid may be passed through the interior space either by separate fluid sources, or by one common fluid source which is adapted to adjust the fluid in terms of temperature and/or pressure.

A further aspect of the present invention relates to a 3D-printed hollow structure comprising an interior space, and a wall at least partially enclosing said interior space. Said wall has a wall inner surface directed to the interior space, wherein at least a part of said wall inner surface is coated with a layer of plastic material. Said layer has a layer inner surface facing the interior space, wherein said layer inner surface has a lower surface roughness than the wall inner surface.

In a preferred embodiment the plastic material comprises or is a thermoplastic material or a thermoset material.

The features and advantages described herein with respect to the method for producing a 3D-printed hollow structure in the same way apply to the 3D-printed hollow structure itself.

In the following six embodiments of the present invention are described by means of a drawing. The drawing shows in
- Fig. 1: a 3D-printed hollow structure according to the prior art, having a rough wall inner surface,
- Fig. 2: a 3D-printed hollow structure produced in accordance with any embodiment of the present invention, having a smooth inner surface,
- Fig. 3: a 3D-printed hollow structure produced in accordance with a first embodiment of the present invention,
- Fig. 4: a 3D-printed hollow structure being produced in accordance with a second embodiment of the present invention, wherein a mold element is inserted into the interior space,
- Fig. 5: the 3D-printed hollow structure of Fig. 4, wherein the mold element has been inserted into the interior space and liquid plastic material is inserted into the gap,
- Fig. 6: a 3D-printed hollow structure being produced in accordance with a third embodiment of the present invention, wherein the mold element is formed as a hollow body through which a pressurized fluid is passed,
- Fig. 7: a 3D-printed hollow structure being produced in accordance with a fourth embodiment of the present invention, wherein a shell element including a bonding material on the shell outer surface is inserted into the interior space,
- Fig. 8: a 3D-printed hollow structure being produced in accordance with a fifth embodiment of the present invention, wherein a bonding material is inserted between the shell outer surface and the wall inner surface, and
- Fig. 9: a 3D-printed hollow structure being produced in accordance with a sixth embodiment of the present invention, wherein the shell element is heated, deformed and cooled by means of a fluid passed through the interior space.

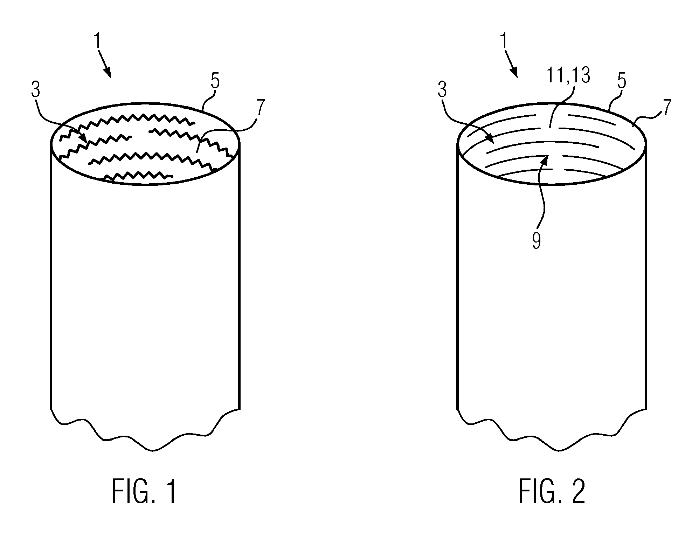

In a first embodiment of the method for producing a 3D-printed hollow structure having a smooth inner surface according to the present invention, as a first step (a), a 3D-printed hollow structure 1 as known in the art, in the present embodiment a pipe, is provided (see Fig. 1). The 3D-printed hollow structure 1 has an interior space 3 and a wall 5 circumferentially enclosing said interior space 3. Said wall 5 has a rough wall inner surface 7 facing the interior space 3.

As a second step (b) a layer 9 of plastic material 13 is applied to the wall inner surface 7. The layer 9 has a smooth layer inner surface 11 facing the interior space 3, said layer inner surface 11 being formed such that it has a lower surface roughness than the wall inner surface 7 (see Fig. 2).

The layer 9 of plastic material 13 is applied to the wall inner surface 7 by providing a plastic material 13 in the liquid state (step b.1), and subsequently, applying the liquid plastic material 13 to the wall inner surface 7 in such a manner that the liquid plastic material 13 forms a smooth layer 9 on the wall inner surface 7 (step b.2), whereupon the layer 9 of plastic material 13 is solidified so that it adheres to the wall inner surface 7 (step b.3).

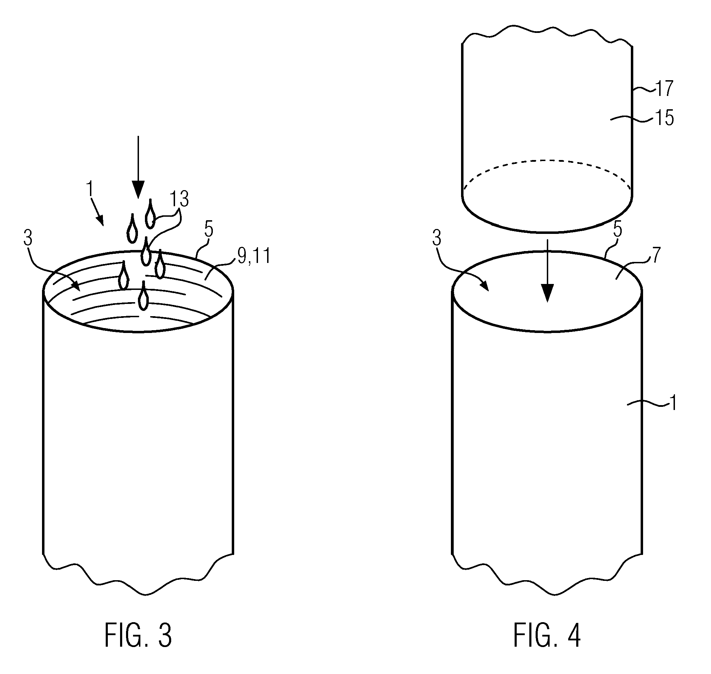

As shown in Fig. 3, the liquid plastic material 13 is applied to the wall inner surface 7 by pouring the liquid plastic material 13 into the interior space 3 so that it contacts the wall inner surface 7 (step b.2.1), and subsequently, removing possible excessive liquid plastic material 13 from the interior space 3 so that only a layer 9 of plastic material 13 remains adhering to the wall inner surface 7 (step b.2.2).

In an alternative second embodiment, which is described hereinafter using corresponding reference numerals for similar features, the method for producing a 3D-printed hollow structure 1 only differs from the method described in connection with the first embodiment by the liquid plastic material 13 being applied to the wall inner surface 7 in a different manner.

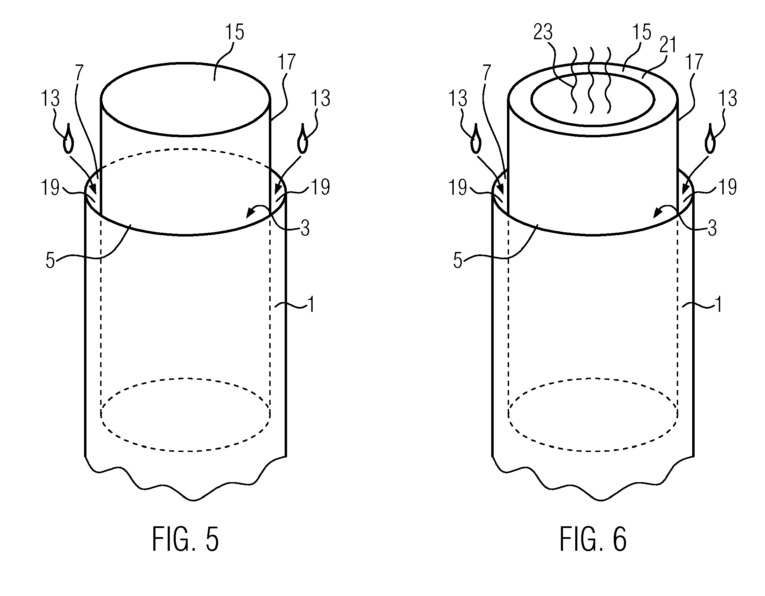

In the second embodiment the liquid plastic material 13 is applied to the wall inner surface 7 by inserting a mold element 15 into the interior space 3 (see Fig. 4), wherein the mold element 15 is formed in such a manner that between an outer surface 17 of the mold element 15 and the wall inner surface 7 a gap 19 is provided (step b.2.1), and subsequently, liquid plastic material 13 is inserted into the gap 19 between the outer surface 17 of the mold element 15 and the wall inner surface 7 (see Fig. 5) by either injection, infusion, or resin transfer molding (RTM) (step b.2.2).

The mold element 15 is formed solidly and may be heated or cooled in order to support solidification of the liquid plastic material 13. The plastic material 13 may be either a thermoplastic material which is cooled for solidification, or a thermoset material which is heated or aged for solidification.

An alternative third embodiment, which is described hereinafter using corresponding reference numerals for similar features, only differs from the second embodiment by the mold element 15 being formed as a hollow body 21, in the present case a pipe, through which a pressurized fluid 23 is passed stabilizing the hollow body 21 (see Fig. 6). The pressurized fluid 23 may be heated or cooled in order to support solidification of the plastic material 13. Further, the pressure of the fluid 23 may be adjusted such that the hollow body 21 deforms in order to vary the gap 19 between the wall inner surface 7 and the hollow body 21.

An alternative fourth embodiment of the present invention, which is described hereinafter using corresponding reference numerals for similar features, only differs from the first embodiment by the layer 9 of plastic material 13 being applied to the wall inner surface 7 in a different manner.

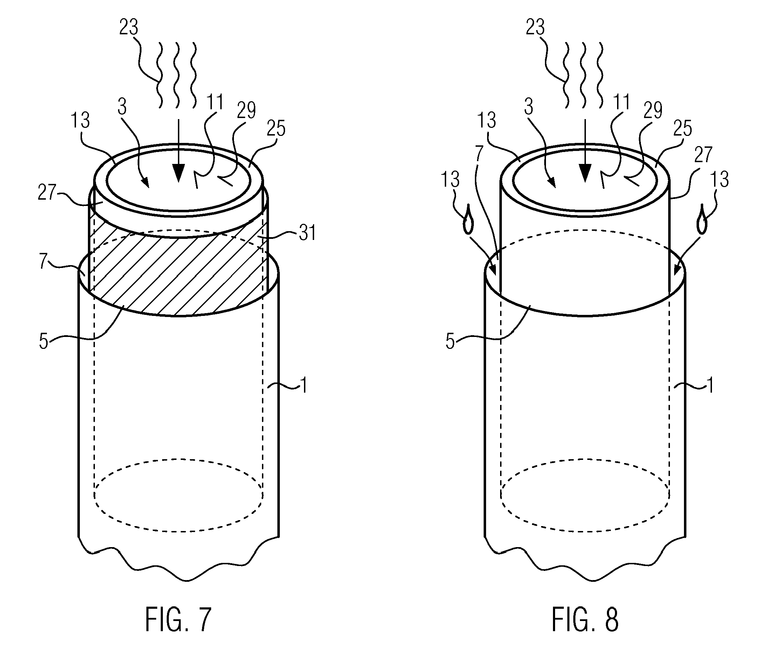

According to the fourth embodiment a shell element 25 of plastic material 13 formed as a pipe is provided which has a shell outer surface 27 and a shell inner surface 29 (step b.1), subsequently, the shell element 25 is inserted into the interior space 3, wherein said shell outer surface 27 faces and corresponds to the wall inner surface 7, and wherein said shell inner surface 29 faces the interior space 3 (step b.2), whereupon the shell outer surface 27 is adhered to the wall inner surface 7 such that the shell element 25 forms the layer 9 of plastic material 13 (step b.3). The shell outer surface 27 is adhered to the wall inner surface 7 by means of a bonding material 31 provided between the shell outer surface 27 and the wall inner surface 7. The bonding material 31 is applied to the shell outer surface 27 before inserting the shell element 25 into the interior space 3 (see Fig. 7). A pressurized fluid 23 can be received in or passed through the shell element 25 in order to stabilize or deform the shape of the shell element 25.

A fifth embodiment of the present invention, which is described hereinafter using corresponding reference numerals for similar features, only differs from the fourth embodiment by the bonding material 31 being inserted between the shell outer surface 27 and the wall inner surface 7 after inserting the shell element 25 into the interior space 3, by means of either injection, infusion, or RTM (see Fig. 8).

A sixth embodiment of the present invention, which is described hereinafter using corresponding reference numerals for similar features, only differs from the fourth embodiment by the shell outer surface 27 being adhered to the wall inner surface 7 in a different manner.

According to the method of the sixth embodiment the shell element 25 is formed of a thermoplastic material and heated up until it is at least partially plastified (step b.3.1), subsequently, the shell element 25 is pressed to the wall inner surface 7 so that the shell element 25 is plastically deformed and the shell outer surface 27 contacts the wall inner surface 7 (step b.3.2), whereupon the shell element 25 is cooled until it solidifies and the shell outer surface 27 adheres to the wall inner surface 7 (step b.3.3).

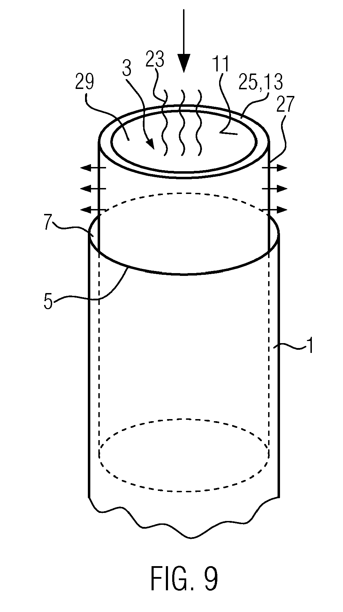

As shown in Fig. 9, a fluid 23 is passed through the interior space 3 in contact to the shell inner surface 29. The fluid 23 can be heated, cooled, and pressurized, so that the shell element 25 is heated up by a heated fluid 23 passing through the interior space 3, pressed to the wall inner surface 7 and plastically deformed by an adequately pressurized fluid 23 passed through the interior space 3, and cooled by a cooled fluid 23 passed through the interior space 3.

By a method according to any of the before described embodiments a 3D-printed hollow structure 1 known in the art and having a rough wall inner surface 7 can be provided with a smooth inner surface by applying a layer 9 of plastic material 13 to the wall inner surface 7 of the hollow structure 1, the layer inner surface 11 of said layer 9 of plastic material 13 having a lower surface roughness than the wall inner surface 7.

In other words, by such a method a 3D-printed hollow structure can be provided, comprising an interior space (3), and a wall (5) at least partially enclosing said interior space (3). The wall (5) has a wall inner surface (7) directed to the interior space (3), wherein at least a part of the wall inner surface (7) is coated with a layer (9) of plastic material (13). The layer (9) has a layer inner surface (11) facing the interior space (3), wherein the layer inner surface (11) has a lower surface roughness than the wall inner surface (7). The plastic material (13) is a thermoplastic material or a thermoset material.

## Claims

1. A method for producing a 3D-printed hollow structure (1) having a smooth inner surface, said method comprising the steps of:
(a) providing a 3D-printed hollow structure (1) having an interior space (3) and a wall (5) at least partially enclosing said interior space (3),
wherein said wall (5) has a wall inner surface (7) facing the interior space (3), and
(b) applying a layer (9) of plastic material (13) to the wall inner surface (7),
wherein said layer (9) has a layer inner surface (11) facing the interior space (3), and
wherein said layer inner surface (11) has a lower surface roughness than the wall inner surface (7).

2. A method according to claim 1, wherein the layer (9) of plastic material (13) is applied to the wall inner surface (7) by the following steps:
(b.1) providing a plastic material (13) in the liquid state,
(b.2) applying said liquid plastic material (13) to the wall inner surface (7) in such a manner that the plastic material (13) forms a smooth layer (9) on the wall inner surface (7), and
(b.3) solidifying the layer (9) of plastic material (13) so that it adheres to the wall inner surface (7).

3. A method according to claim 2, wherein the liquid plastic material (13) is applied to the wall inner surface (7) by the steps of:
(b.2.1) passing the liquid plastic material (13) into the interior space (3) so that it contacts the wall inner surface (7), and
(b.2.2) removing possible excessive liquid plastic material (13) from the interior space (3) so that only a layer (9) of plastic material (13) remains adhering to the wall inner surface (7).

4. A method according to claim 2, wherein the liquid plastic material (13) is applied to the wall inner surface (7) by the steps of:
(b.2.1) inserting a mold element (15) into the interior space (31), wherein said mold element (15) is formed in such a manner that between an outer surface (17) of the mold element (15) and the wall inner surface (7) a gap (19) is provided,
(b.2.2) inserting the liquid plastic material (13) into the gap (19) between the outer surface (17) of the mold element (15) and the wall inner surface (7).

5. A method according to claim 4, wherein the liquid plastic material (13) is inserted into the gap (19) between the outer surface (17) of the mold element (15) and the wall inner surface (7) by means of injection, infusion, or resin transfer molding (RTM).

6. A method according to claim 4 or 5, wherein the mold element (15) is formed solidly, or
wherein the mold element (15) is formed as a hollow body (21) through which a pressurized fluid (23) is passed stabilizing the hollow body (21).

7. A method according to any of claims 2 to 6, wherein the plastic material (13) comprises a thermoplastic material which is cooled for solidifying, or
wherein the plastic material (13) comprises a thermoset material which is heated or aged for solidifying.

8. A method according to claim 1, wherein the layer (9) of plastic material (13) is applied to the wall inner surface (7) by the following steps:
(b.1) providing a shell element (25) of plastic material (13), wherein said shell element (25) has a shell outer surface (27) and a shell inner surface (29),
(b.2) inserting the shell element (25) into the interior space (3), wherein said shell outer surface (27) faces and corresponds to the wall inner surface (7), and wherein said shell inner surface (29) faces the interior space (3),
(b.3) adhering the shell outer surface (27) to the wall inner surface (7).

9. A method according to claim 8, wherein the shell outer surface (27) is adhered to the wall inner surface (7) by means of a bonding material (31) provided between the shell outer surface (27) and the wall inner surface (7).

10. A method according to claim 9, wherein the bonding material (31) is applied to the shell outer surface (27) before inserting the shell element (25) into the interior space (3).

11. A method according to claim 9, wherein the bonding material (31) is inserted between the shell outer surface (27) and the wall inner surface (7) after inserting the shell element (25) into the interior space (3), by means of injection, infusion, or resin transfer molding (RTM).

12. A method according to claim 8, wherein the shell element (25) is formed of a thermoplastic material and the shell outer surface (27) is adhered to the wall inner surface (7) by the steps of:
(b.3.1) heating up the shell element (25) until it is at least partially plastified,
(b.3.2) pressing the shell element (25) to the wall inner surface (7) so that the shell element (25) is plastically deformed and the shell outer surface (27) contacts the wall inner surface (7), and
(b.3.3) cooling the shell element (25) until it solidifies and the shell outer surface (27) adheres to the wall inner surface (7).

13. A method according to claim 12, wherein the shell element (25) is
heated up by means of a heated fluid (23) which is passed through the interior space (3) in contact to the shell inner surface (29),
deformed by means of a pressurized fluid (23) which is passed through the interior space (3) in contact to the shell inner surface (29), and
cooled by means of a cooled fluid (23) which is passed through the interior space (3) in contact to the shell inner surface (29).

14. A 3D-printed hollow structure (1) comprising an interior space (3), and
a wall (5) at least partially enclosing said interior space (3),
wherein said wall (5) has a wall inner surface (7) directed to the interior space (3),
wherein at least a part of said wall inner surface (7) is coated with a layer (9) of plastic material (13),
wherein said layer (9) has a layer inner surface (11) facing the interior space (3), and
wherein said layer inner surface (11) has a lower surface roughness than the wall inner surface (7).

15. A 3D-printed hollow structure (1) according to claim 14, wherein the plastic material (13) comprises a thermoplastic material or a thermoset material.
